# EUROPEAN PATENT SPECIFICATION

(11) **EP 3 366 557 B1**
(45) Date of publication and mention of the grant of the patent: **29.12.2021**
(21) Application number: 18152068.5
(22) Date of filing: 17.01.2018
(51) Int. Cl.: B62J 17/02

(54) **FRONT AND LEG COVER OF A STRADDLED VEHICLE**
FRONT- UND BEINABDECKUNGEN EINES GRÄTSCHSITZFAHRZEUGS
COUVRE-JAMBES ET D'AVANT POUR UN VÉHICULE À ENFOURCHER

(30) Priority: 28.02.2017 JP 2017036625
(43) Date of publication of application: 29.08.2018
(73) Proprietor: Yamaha Hatsudoki Kabushiki Kaisha, Iwata-shi Shizuoka 438-8501 (JP)
(72) Inventor: TAKARA, Koji, Iwata-shi, Shizuoka 438-8501 (JP)
(74) Representative: Grünecker Patent- und Rechtsanwälte PartG mbB

(56) References cited:
- EP-A1- 2 818 390
- CN-A- 101 497 358
- JP-A- H06 156 349

## Description

The present invention relates to a straddled vehicle including a leg shield.

Prior art document CN 101497358 A discloses a loading device of motorcycles, disclosing the features of the preamble of claim 1.

The connecting position of a hook part is adjustable so that hooked object can be stably supported. A band connecting piece is connected on a head tube. The connecting piece is provided with a plurality of connecting holes, and a loading hook is optionally connected with the connecting holes. The connecting piece comprises a vehicle lateral part and a front and a rear parts. The vehicle lateral part is laterally extended inside the vehicle along the rear surface of the front protecting cap. The connecting position of the loading hook can be adjusted laterally inside the vehicle. The front and rear parts are extended along the lateral face of the protecting cap in front and rear directions. A loading element can be connected with the front and rear parts. The connecting piece is optionally connected with a nut hole vertically installed on the head tube. Thus, the connecting position of the connecting piece can be adjusted in vertical direction.

Prior art document EP 2818390 A1 discloses a saddle-ride type vehicle includes a front fork, a footboard and a top-side cover part. The front fork includes a bottom bridge supporting a lower end portion of a steering shaft and an upper end portion of a fork main body. In a side view, right and left rear ends of a front-side cover part are located forward of right and left grips. The top-side cover part has a right-side top surface and a left-side top surface. The right-side and left-side top surfaces are extended in the back-and-forth direction, while being located laterally to a translucent cover. The right-side and left-side top surfaces are located lower than a center of the translucent cover in the up-and-down direction.

Prior art document JP H06 156 349 A discloses a frame cover structure of a scooter type vehicle. In such scooter type vehicle, a lower floor type step board is formed between a handle bar and a sitting seat. And by a leg cover rising at the front part of the step board, the front head of a car body frame which consists of a frame pipe and a frame body is covered from the rear side. In such a structure, the leg cover is positioned to the car body frame with plural positioning means. The upper part of the leg cover is fixed to the car body frame with plural upper part fixing means. Furthermore, the lower part of the leg cover is fixed to the step board with plural fitting means and plural lower part fixing means.

A front cover is provided in a front part of a scooter-type motorcycle. For example, in a scooter-type motorcycle described in JP 2007-126126 A, a front cover having a front surface that is in parallel with a head pipe is employed. Further, a footboard is provided at a position downward and rearward of the front cover. A leg shield is provided between a lower end of the front cover and the footboard.

It is desirable that a leg shield is more largely formed in a vehicle left-and-right direction in order to be able to receive a large amount of mud splashed from a road surface by a front wheel. In the above-mentioned motorcycle, the front cover is provided to be rotatable together with a handle, and the leg shield is fixed to a body frame. In this case, it is not possible to increase the size of the leg shield in the vehicle left-and-right direction in order to prevent interference between the front cover and the leg shield during an operation of the handle by a rider.

As such, it is considered that the front cover is configured to be fixed to the body frame independently from the handle and the leg shield is configured to be fixed to the front cover. In this case, it is not necessary to consider interference between the front cover and the leg shield during the operation of the handle. Thus, the size of the leg shield can be increased in the vehicle left-and-right direction.

However, in the configuration in which the front cover is fixed to the body frame, it is necessary to increase the size of the front cover in the vehicle left-and-right direction such that a pair of fork tubes is rotatable in the front cover. When the size of the front cover in the vehicle left-and-right direction is increased, negative pressure is generated in a space rearward of the front cover during travelling of the vehicle. Thus, comfort of the rider is reduced.

An object of the present invention is to provide a straddled vehicle in which a size of a front part of the vehicle can be reduced in a front-and-rear direction, a reduction in occupant comfort can be inhibited, and ability to receive mud splashed from a road surface can be improved.

According to the present invention said object is solved by a straddled vehicle having the features of independent claim 1. Preferred embodiments are laid down in the dependent claims.

Hence, a straddled vehicle includes a head pipe, a front fork rotatably provided at the head pipe, a front cover supported at the head pipe, and a leg shield provided rearwardly of the front cover in a vehicle front-and-rear direction, wherein the front cover has a cover front surface portion arranged forwardly of the head pipe in the vehicle front-and-rear direction, and a cover rear surface portion arranged rearwardly of the head pipe in the vehicle front-and-rear direction, a front edge of the cover front surface portion in a side view of the vehicle extends along a first virtual line that is in parallel with a central axis of the head pipe in the side view of the vehicle at a position forward of the head pipe, a rear edge of the cover rear surface portion in the side view of the vehicle extends along a second virtual line that is in parallel with the central axis of the head pipe in the side view of the vehicle at a position rearward of the head pipe, the leg shield has an upper shield portion attached to the cover rear surface portion, and a lower shield portion provided below the upper shield, part of the cover rear surface portion and part of the upper shield portion overlap with each other in a front view of the vehicle, the upper shield portion extends along the cover rear surface portion to a position farther downward than a tower end of the cover rear surface portion in the side view of the vehicle, the lower shield portion extends obliquely, downwardly and rearwardly of the vehicle from a lower end of the upper shield portion in the side view of the vehicle, a left groove extending along the second virtual line in the side view of the vehicle is formed between a left side edge of the cover rear surface portion and a left side edge of the upper shield portion, and a right groove extending along the second virtual line in the side view of the vehicle is formed between a right side edge of the cover rear surface portion and a right side edge of the upper shield portion.

In the straddled vehicle, the cover front surface portion and the cover rear surface portion respectively have outer shapes, which are substantially in parallel with the central axis of the head pipe and substantially flat. Thus, the flat front cover that is made compact in the front-and-rear direction is realized. Therefore, the size of the front part of the vehicle can be reduced in the front-and-rear direction.

Further, the front cover is supported at the head pipe independently from the front fork, so that the front cover does not rotate during an operation of the handle by the rider. Further, the upper shield portion of the leg shield is attached to the cover rear surface portion of the front cover. In such a configuration, it is not necessary to consider the interference between the front cover and the leg shield during the operation of the handle. Thus, the width of the leg shield in the vehicle left-and-right direction can be increased. Thus, a large part of mud splashed by the front wheel from the road surface during travelling of the vehicle is received by the upper shield portion and the lower shield portion of the leg shield, and does not reach the rider. In this manner, the ability to receive mud splashed from the road surface can be improved.

Further, the lower end of the upper shield portion is located at a position farther downward than the lower end of the cover rear surface portion, so that air flowing rearwardly in the vicinity of the lower end of the cover rear surface portion during travelling of the vehicle is led to the upper shield portion. Air led to the upper shield portion flows along the left groove and the right groove into a space rearward of the front cover. Thus, negative pressure is unlikely to be generated in the space rearward of the front cover. Therefore, a reduction in comfort of the rider in the straddled vehicle is inhibited.

A maximum width from a center of the vehicle to a left side edge of the leg shield may be larger than a maximum width from the center of the vehicle to a left side edge of the cover rear surface portion in a vehicle left-and-right direction, and a maximum width from the center of the vehicle to a right side edge of the leg shield may be larger than a maximum width from the center of the vehicle to a right side edge of the cover rear surface portion in the vehicle left-and-right direction.

In this case, at least part of mud splashed rearwardly at a position farther leftward than the left side edge of the cover rear surface portion during travelling of the vehicle is received by the leg shield. Further, at least part of mud splashed rearwardly at a position farther rightward than the right side edge of the cover rear surface portion during travelling of the vehicle is received by the leg shield. Thus, the ability to receive mud in the leg shield is more sufficiently improved.

The straddled vehicle may further include a front fender provided at the front fork at a position above a front wheel, wherein the front fender may be provided to extend in the vehicle front-and-rear direction in a plan view of the vehicle, and a lower end of the front fender may be located at a position farther downward than a lower end of the cover rear surface portion and farther upward than a lower end of the upper shield portion.

In this case, at least part of air flowing rearwardly along the front fender during travelling of the vehicle is smoothly led to the upper shield portion. Therefore, a sufficient amount of air can be led to the space rearward of the front cover.

The straddled vehicle may further include a seat provided at a position farther rearward than the front cover and the leg shield, wherein an upper end of the upper shield portion of the leg shield may be located at a position farther downward than an upper end of the seat.

In this case, air flowing along the left groove and the right groove during travelling of the vehicle is smoothly led to a space between the front cover and the seat. Thus, negative pressure is unlikely to be generated in the space between the front cover and the seat. Therefore, a reduction in comfort of the rider who is seated on the seat is more sufficiently inhibited.

The straddled vehicle may further include a footboard provided to extend rearwardly of the vehicle from the lower shield portion of the leg shield, and a body frame joined to the head pipe, wherein the body frame may include a down frame that extends downwardly and rearwardly of the vehicle from the head pipe, and a rear frame that extends rearwardly of the vehicle from the down frame, at least part of an upper surface of the footboard may be arranged above the rear frame and may overlap with the rear frame in a plan view of the vehicle, and the footboard may be located at a position farther downward than the upper shield portion in the side view of the vehicle.

In this case, in a small-size straddled vehicle in which only the down frame is joined to the head pipe, the size of the front part of the vehicle can be reduced in the front-and-rear direction, a reduction in occupant comfort can be inhibited, and the ability to receive mud splashed from the road surface can be improved.

A main footrest surface extending in the vehicle front-and-rear direction in the plan view of the vehicle may be formed at at least part of an upper surface of the footboard, and the lower shield portion may have a sub-footrest surface extending obliquely, forwardly and upwardly of the vehicle from a front end of the main footrest surface in the side view of the vehicle.

In this case, the rider can easily change driving posture by placing his or her feet on the main footrest and the sub-footrest. Therefore, occupant comfort of the straddled vehicle is improved.

The front cover may further have a left cover side surface portion arranged leftwardly of the head pipe in a vehicle left-and-right direction, and a right cover side surface portion arranged rightwardly of the head pipe in the vehicle left-and-right direction, the left cover side surface portion may connect a left side edge of the cover front surface portion to a left side edge of the cover rear surface portion, the right cover side surface portion may connect a right side edge of the cover front surface portion to a right side edge of the cover rear surface portion, and an opening penetrating the front cover from a position forward of the vehicle to a position rearward of the vehicle may be formed in each of the left cover side surface portion and the right cover side surface portion.

In this case, air flowing from a position forward of the front cover into the openings of the left cover side surface portion and the right cover side surface portion during travelling of the vehicle is smoothly led to the space rearward of the front cover. Therefore, a more sufficient amount of air can be led to the space rearward of the front cover.

### BRIEF DESCRIPTION OF THE SEVERAL VIEWS OF THE DRAWING

Fig. 1 is a side view of a motorcycle according to one preferred embodiment;
Fig. 2 is a perspective view showing the appearance of a head pipe and a body frame included in the motorcycle of Fig. 1;
Fig. 3 is a plan view of the motorcycle of Fig. 1;
Fig. 4 is a front view of the motorcycle of Fig. 1;
Fig. 5 is a side view showing a front part of the motorcycle of Fig. 1;
Fig. 6 is a front view for explaining a positional relationship between a cover rear surface portion and a leg shield in the front view of the vehicle;
Fig. 7 is a cross sectional view of a front cover and a leg shield cut along a plane that includes the line J-J of Fig. 5 and is orthogonal to a central axis of the head pipe;
Fig. 8 is a diagram for explaining functions of a left groove and a right groove formed between the cover rear surface portion and an upper shield portion; and
Fig. 9 is a longitudinal cross sectional view of the motorcycle taken along the line K-K of Fig. 5.

### DESCRIPTION OF THE PREFERRED EMBODIMENTS

A straddled vehicle according to one preferred embodiment will be described below with reference to the drawings. In the following description, a motorcycle is described as one example of the straddled vehicle.

### [1] Schematic Configuration of Motorcycle

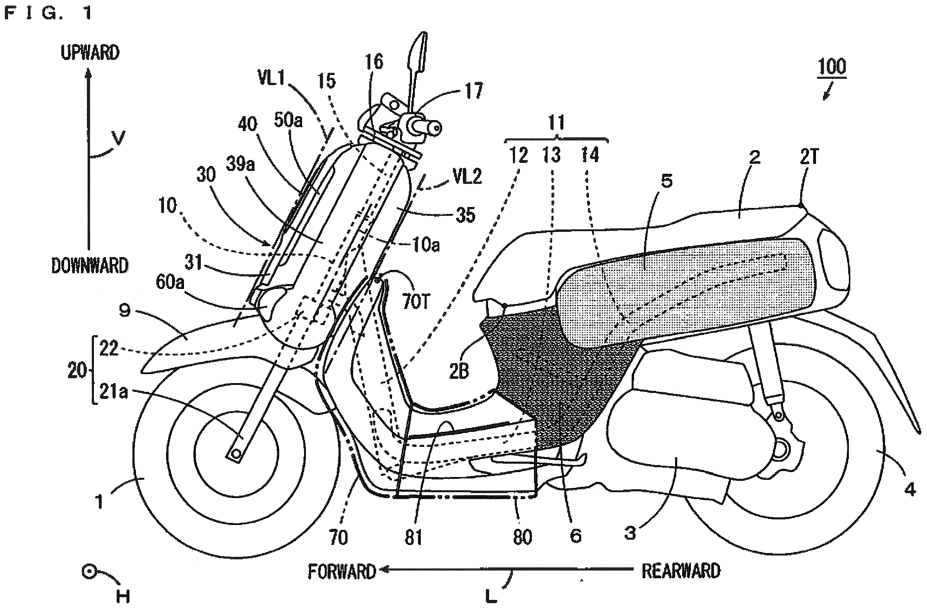

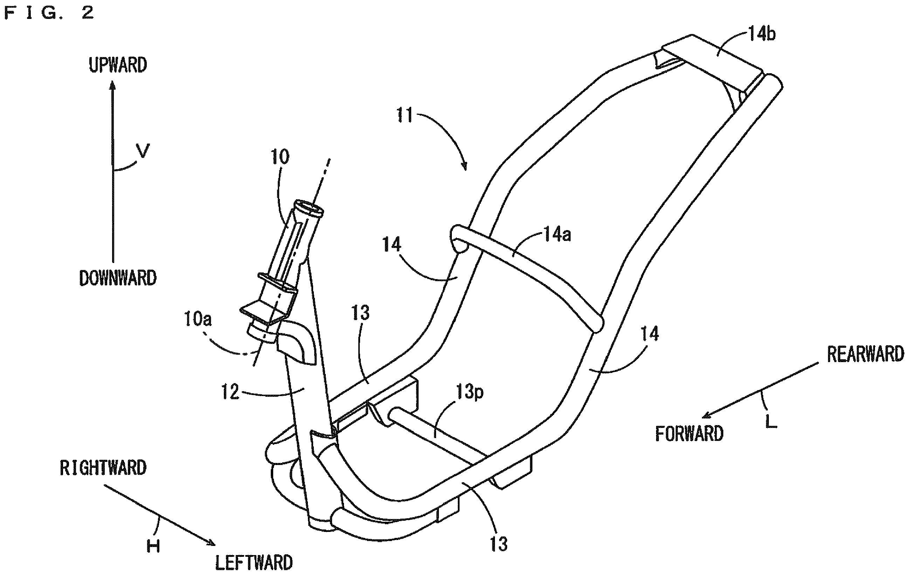

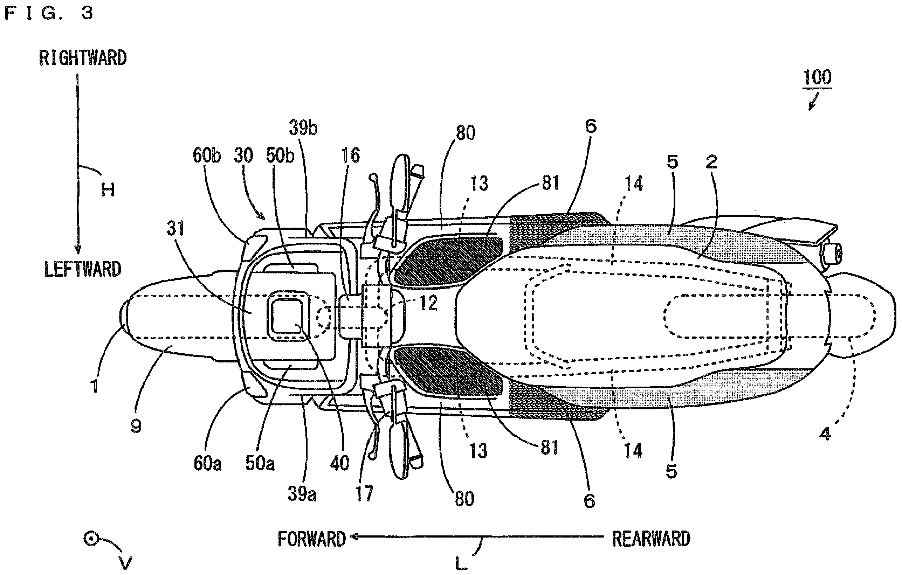

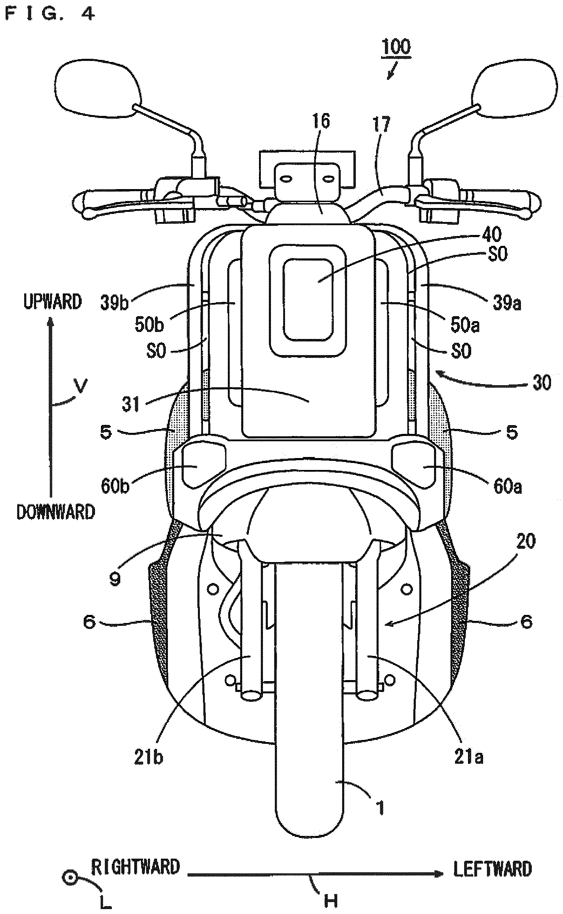

Fig. 1 is a side view of the motorcycle according to the one preferred embodiment, and Fig. 2 is a perspective view showing the appearance of a head pipe and a body frame included in the motorcycle 100 of Fig. 1. Fig. 3 is a plan view of the motorcycle 100 of Fig. 1, and Fig. 4 is a front view of the motorcycle 100 of Fig. 1.

In Figs. 1, 3 and 4, the motorcycle 100 is shown standing up to be perpendicular to a road surface. In each of Figs. 1 and subsequent given diagrams, a front-and-rear direction L, a left-and-right direction H and a top-and-bottom direction V of the motorcycle 100 are suitably indicated by arrows. In the following description, a direction in which the arrow is directed in the front-and-rear direction L is referred to as forward, and its opposite direction is referred to as rearward. Further, a direction in which the arrow is directed in the left-and-right direction H is referred to as leftward, and its opposite direction is referred to as rightward. A direction in which the arrow is directed in the top-and-bottom direction V is referred to as upward, and its opposite direction is referred to as downward.

As shown in Fig. 1, the motorcycle 100 includes the head pipe 10 and the body frame 11. As shown in Fig. 2, the body frame 11 mainly includes one down frame 12, a pair of left and right first rear frames 13 and a pair of left and right second rear frames 14. The head pipe 10 is provided to pass through a center of the motorcycle 100 in the left-and-right direction H and extend obliquely, downwardly and forwardly in a vertical plane extending in the front-and-rear direction L. The one down frame 12 is provided to extend obliquely, rearwardly and downwardly from a substantially center portion of the head pipe 10. In this manner, in the present embodiment, only the one down frame 12 is joined to the head pipe 10 as the body frame 11.

The left and right first rear frames 13 is curved while spreading in the left-and-right direction H from a position in the vicinity of the lower end of the down frame 12 and extends rearwardly. A pivot shaft 13p extending in the left-and-right direction H is provided at lower ends of the rear ends of the left and right first rear frames 13. The left and right second rear frames 14 extend respectively, obliquely, upwardly and rearwardly from the rear ends of the left and right first rear frames 13. Two connection pieces 14a, 14b are provided to respectively connect center portions of the left and right second rear frames 14 to each other and respectively connect the rear ends of the left and right second rear frames 14 to each other.

As shown in Fig. 1, a steering shaft 15 and a front fork 20 are supported at the head pipe 10 to be rotatable about a central axis 10a of the head pipe 10. Specifically, the steering shaft 15 is inserted into the head pipe 10. The steering shaft 15 extends in a direction of the central axis 10a of the head pipe 10 from a position farther downward than the head pipe 10 to a position farther upward than the head pipe 10. A handle 17 is attached to the upper end of the steering shaft 15 via a handlebar stem 16.

The front fork 20 is mainly constituted by a pair of left and right fork tubes 21a, 21b (Fig. 4) and the under bracket 22. The under bracket 22 is connected to the lower end of the steering shaft 15 at a position below the head pipe 10 and couples the upper ends of the left and right fork tubes 21a, 21b to each other. A front wheel 1 is rotatably attached to the lower ends of the pair of fork tubes 21a, 21b.

A front fender 9 is provided above the front wheel 1. The front fender 9 is attached to the front fork 20 and extends in the front-and-rear direction L in the plan view of the vehicle (Fig. 3).

A front cover 30 is further supported at the head pipe 10 independently from the steering shaft 15 and the front fork 20. Thus, the front fork 20 is rotatable relative to the front cover 30. The front cover 30 has a cover front surface portion 31, a cover rear surface portion 35 and a pair of left and right cover side surface portions 39a, 39b (Figs. 3 and 4).

The cover front surface portion 31 is arranged forwardly of the head pipe 10 in the front-and-rear direction L. A front edge of the cover front surface portion 31 in a side view of the vehicle is in a space farther forward than the head pipe 10 and extends along a first virtual line VL1 that is in parallel with the central axis 10a of the head pipe 10 in the side view of the vehicle. Here, the front edge of the cover front surface portion 31 in the side view of the vehicle partially forms a contour of the cover front surface portion 31 when the cover front surface portion 31 is viewed from a position sideward of the motorcycle 100. Further, the above expression "the front edge of the cover front surface portion 31 in the side view of the vehicle extends along the first virtual line VL1" means that the front edge of the cover front surface portion 31 in the side view of the vehicle is not spaced apart from the first virtual line VL1 by a distance larger than a certain distance (10 cm, for example) in the side view of the vehicle, and that the front edge of the cover front surface portion 31 in the side view of the vehicle extends in parallel with the direction of the first virtual line VL1 or extends substantially in parallel with the first virtual line VL1 without inclining by an angle equal to or larger than a certain angle (15°, for example) with respect to the first virtual line VL1.

The cover rear surface portion 35 is arranged rearwardly of the head pipe 10 in the front-and-rear direction L. A rear edge of the cover rear surface portion 35 in the side view of the vehicle is in a space farther rearward than the head pipe 10 and extends along a second virtual line VL2 that is in parallel with the central axis 10a of the head pipe 10 in the side view of the vehicle. Here, the rear edge of the cover rear surface portion 35 in the side view of the vehicle partially forms a contour of the cover rear surface portion 35 when the cover front surface portion 31 is viewed from a position sideward of the motorcycle 100. Further, the above expression "the rear edge of the cover rear surface portion 35 in the side view of the vehicle extends along the second virtual line VL2" means that the rear edge of the cover rear surface portion 35 in the side view of the vehicle is not spaced apart from the second virtual line VL2 by a distance larger than a certain distance (10 cm, for example) in the side view of the vehicle, and that the rear edge of the cover rear surface portion 35 in the side view of the vehicle extends in parallel with the second virtual line VL2 or extends substantially in parallel with the second virtual line VL2 without inclining by an angle equal to or larger than a certain angle (15°, for example) with respect to the second virtual line VL2.

The cover front surface portion 31 and the cover rear surface portion 35 are opposite to each other with the head pipe 10 sandwiched therebetween. The left cover side surface portion 39a is arranged leftwardly of the head pipe 10, and connects a left side edge of the cover front surface portion 31 to a left side edge of the cover rear surface portion 35. The right cover side surface portion 39b (Figs. 3 and 4) is arranged rightwardly of the head pipe 10 and connects a right side edge of the cover front surface portion 31 to a right side edge of the cover rear surface portion 35. As shown in Fig. 4, a slit opening SO is formed in each of the left and right cover side surface portions 39a, 39b. The slit openings SO penetrate the front cover 30 in the front-and-rear direction L. Further, the slit openings SO extend in the top-and-bottom direction V in the front view of the vehicle.

As shown in Figs. 3 and 4, a headlamp 40, a pair of left and right position lamps 50a, 50b and a pair of left and right flasher lamps 60a, 60b are provided at the cover front surface portion 31 of the front cover 30.

As shown in Fig. 1, a leg shield 70 is provided rearwardly of the front cover 30 in the front-and-rear direction L. The leg shield 70 is partially formed to cover the down frame 12 from above. Details of the leg shield 70 will be described below.

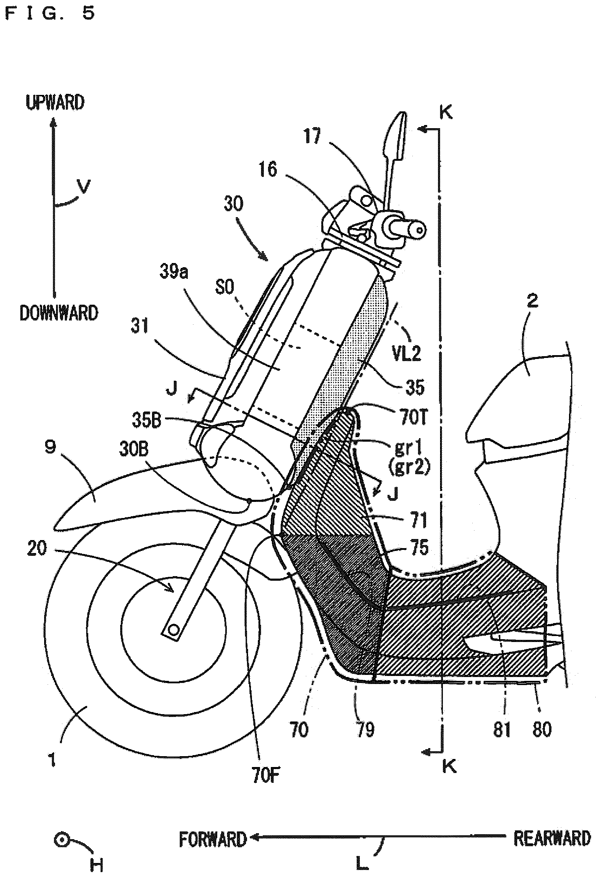

A footboard 80 is provided to extend rearwardly from a lower shield portion 75 (Fig. 5), described below, of the leg shield 70. Part of the footboard 80 is formed to cover the respective left and right first rear frames 13 from above. Thus, as shown in Fig. 3, the footboard 80 has an upper surface that is arranged above the left and right first rear frames 13 and overlaps with the left and right first rear frames 13 in the plan view of the vehicle. A pair of left and right main footrest surfaces 81 that respectively extend in the front-and-rear direction L in the plan view of the vehicle are formed on left and right portions, which overlap with the left and right first rear frames 13 in the plan view of the vehicle, of an upper surface of the footboard 80. In Fig. 3, hatching is applied to the left and right main footrest surfaces 81 in order to facilitate understanding of shapes of the left and right main footrest surfaces 81.

As shown in Fig. 1, a seat 2 is provided at a position above the rear end of the footboard 80. The seat 2 extends in the front-and-rear direction L from a substantially central upper portion of the motorcycle 100 to the rear end of the vehicle. Further, the seat 2 is supported by the left and right second rear frames 14 of Fig. 2 at a position spaced apart rearwardly from the front cover 30.

Side covers 5 are provided at the left and right of the seat 2. The left and right side covers 5 are provided to sandwich rear half portions of the left and right second rear frames 14 located below the seat 2 in the left-and-right direction H. In Figs. 1, 3 and 4, a dotted pattern is applied to the side covers 5 in order to facilitate understanding of the shapes of the side covers 5.

Left and right center covers 6 are provided below the front end of the seat 2 and its vicinity to connect the footboard 80 to the left and right side covers 5. The left and right center covers 6 are provided to sandwich front half portions of the left and right second rear frames 14 in the left and right direction H. In Figs. 1, 3 and 4, a dotted pattern different from the dotted pattern applied to the side covers 5 is applied to the center covers 6 in order to facilitate understanding of the shapes of the center covers 6.

An engine 3 is provided below the seat 2 and the left and right second rear frames 14. The engine 3 is a unit-swing type engine and is supported at the body frame 11 via the pivot shaft 13p of Fig. 2. In this state, the engine 3 is swingable in the top-and-bottom direction V with the pivot shaft 13p as a center. The rear wheel 4 is rotatably attached to the rear end of the engine 3. The rear wheel 4 is rotated by motive power generated by the engine 3.

### [2] Configuration of Leg Shield and its Periphery

Fig. 5 is a side view showing a front part of the motorcycle 100 of Fig. 1. In Fig. 5, the side view of a part, which is located at a position farther forward than the seat 2, of the motorcycle 100 is shown as the front part of the motorcycle 100. As shown in Fig. 5, the leg shield 70 has an upper shield portion 71 and a lower shield portion 75. In Fig. 5, different patterns of hatching are applied to the upper shield portion 71, the lower shield portion 75 and the footboard 80, and a dotted pattern is applied to the cover rear surface portion 35 of the front cover 30, in order to facilitate understanding of the shapes of the leg shield 70 and its peripheral members.

The upper shield portion 71 is attached to the cover rear surface portion 35 of the front cover 30. A front edge of the upper shield portion 71 in the side view of the vehicle extends along a rear edge of the cover rear surface portion 35 to a position farther downward than a lower end 35B of the cover rear surface portion 35 in the side view of the vehicle. The front edge of the upper shield portion 71 in the side view of the vehicle forms part of a contour of the upper shield portion 71 when the upper shield portion 71 is viewed from a position sideward of the motorcycle 100. The upper end of the upper shield portion 71, that is, an upper end 70T of the leg shield 70 is located at a position spaced apart from the center of the cover rear surface portion 35 in the top-and-bottom direction V by a certain distance.

The lower shield portion 75 is provided below the upper shield portion 71. A front edge of the lower shield portion 75 in the side view of the vehicle extends obliquely, downwardly and rearwardly from the lower end of the front edge of the upper shield portion 71 in the side view of the vehicle. The footboard 80 extends rearwardly from the rear end of the lower shield portion 75. The front edge of the lower shield portion 75 in the side view of the vehicle forms part of a contour of the lower shield portion 75 when the lower shield portion 75 is viewed from a position sideward of the motorcycle 100.

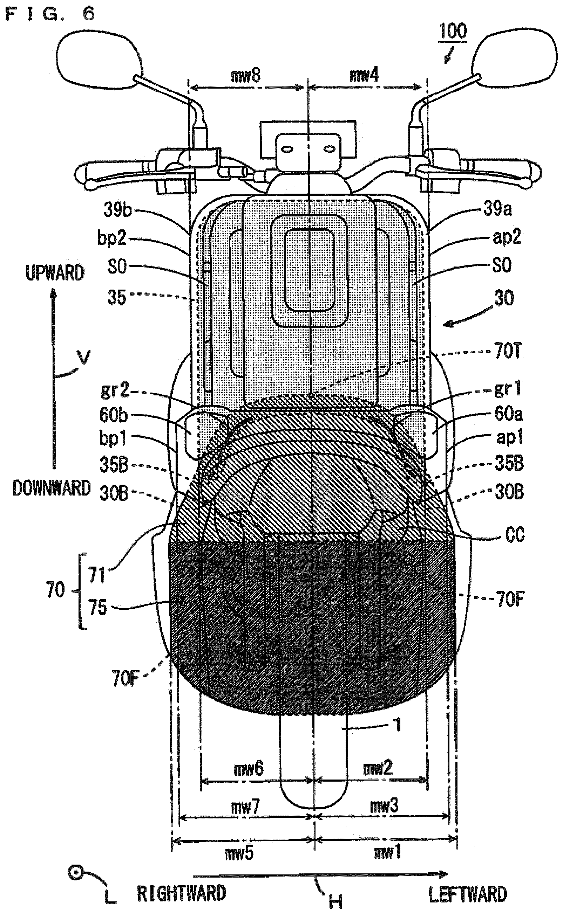

Here, a portion of the leg shield 70 located at a boundary between the front edge of the upper shield portion 71 and the front edge of the lower shield portion 75 in the side view of the vehicle is referred to as a shield farthest front portion 70F. In the leg shield 70, shield farthest front portions 70F are present at the left and right as shown in Fig. 6, described below. The left and right shield farthest front portions 70F are located at the farthest forward positions in the leg shield 70 in the front-and-rear direction L.

In the front cover 30 according to the present embodiment, the lower ends of the left and right cover side surface portions 39a, 39b are located at positions farther downward than the lower ends 35B of the cover rear surface portion 35 and the lower ends of the cover front surface portion 31. Therefore, the lower ends of the left and right cover side surface portions 39a, 39b are lowest ends 30B of the front cover 30. The front edge of the upper shield portion 71 in the side view of the vehicle extends along the rear edge of the cover rear surface portion 35 to a position farther downward than the lowest ends 30B of the front cover in the side view of the vehicle. Thus, the shield farthest front portions 70F of the leg shield 70 are located at positions farther downward than the lowest ends 30B of the front cover 30.

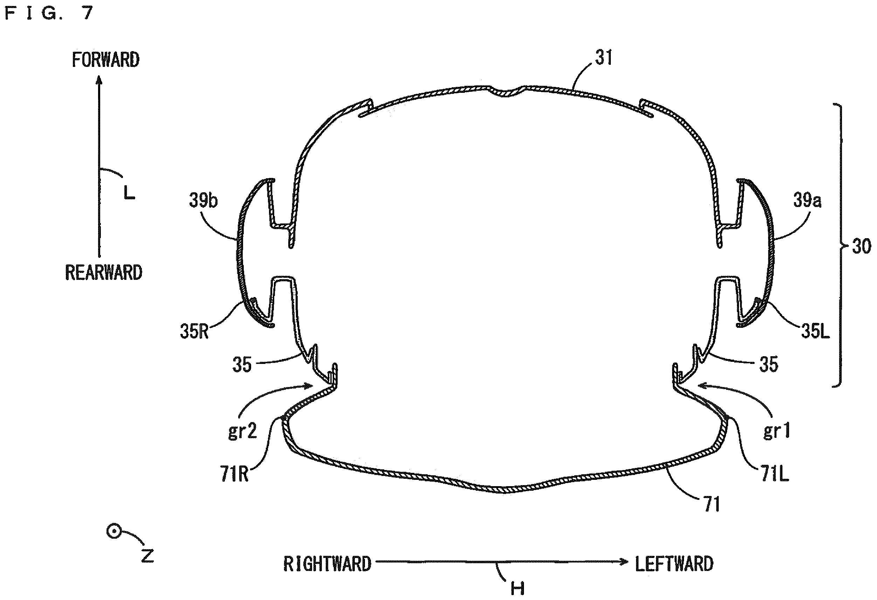

Fig. 6 is a front view for explaining a positional relationship between the cover rear surface portion 35 and the leg shield 70 in the front view of the vehicle. Fig. 7 is a cross sectional view of the front cover 30 and the leg shield 70 cut along a plane that includes the line J-J of Fig. 5 and is orthogonal to the central axis 10a of the head pipe 10.

In Fig. 6, outer shapes of the cover rear surface portion 35 and the leg shield 70 as viewed through transparent constituent elements that exclude the cover rear surface portion 35 and the leg shield 70 from a position forward of the motorcycle 100 are indicated by dotted lines. Further, in Fig. 6, similarly to the example of Fig. 5, different patterns of hatching are applied to the upper shield portion 71 and the lower shield portion 75, and a dotted pattern is applied to the cover rear surface portion 35 of the front cover 30.

As shown in Fig. 6, the lower edge of the cover rear surface portion 35 has a substantially circular arc shape and is curved gently and upwardly from the left lower end to the right lower end of the cover rear surface portion 35 in the front view of the vehicle. Further, similarly to the lower edge of the cover rear surface portion 35, the upper edge of the leg shield 70 has a substantially circular arc shape and is curved gently and upwardly from the left lower end to the right lower end of the upper shield portion 71 in the front view of the vehicle. The upper end 70T of the leg shield 70 is located at the center of the motorcycle 100 in the left-and-right direction H.

Part of the cover rear surface portion 35 of the front cover 30 and part of the upper shield portion 71 of the leg shield 70 overlap with each other in the front view of the vehicle. As shown in Fig. 7, in a portion in which the cover rear surface portion 35 overlaps with the upper shield portion 71 in the front view of the vehicle, a left groove gr1 is formed between a left side edge 35L of the cover rear surface portion 35 and a left side edge 71L of the upper shield portion 71. As indicated by a thick one-dot and dash line in Fig. 5, the left groove gr1 extends upwardly and rearwardly from the lower end of the cover rear surface portion 35 along the second virtual line VL2 in the side view of the vehicle. Here, the above expression "the left groove gr1 extends along the second virtual line VL2 in the side view of the vehicle" refers to that the left groove gr1 is not spaced apart from the second virtual line VL2 by a distance larger than a certain distance (10 cm, for example) in the side view of the vehicle, and that the left groove gr1 extends in parallel with the second virtual line VL2 or extends substantially in parallel with the second virtual line VL2 without inclining by an angle equal to or larger than a certain angle (15°, for example) with respect to the second virtual line VL2. Further, as indicated by a thick one-dot and dash line in Fig. 6, the left groove gr1 extends upwardly while being curved gently and inwardly of the vehicle from a position in the vicinity of the left lower end of the cover rear surface portion 35 in the front view of the vehicle.

Further, as shown in Fig. 7, in a portion in which the cover rear surface portion 35 and the upper shield portion 71 overlap with each other in the front view of the vehicle, a right groove gr2 is formed between a right side edge 35R of the cover rear surface portion 35 and a right side edge 71R of the upper shield portion 71. The cover rear surface portion 35 and the upper shield portion 71 are configured to be symmetrical with each other with respect to a vertical plane passing through the center of the motorcycle 100 in the left-and-right direction H and extending in the front-and-rear direction L. Therefore, similarly to the left groove gr1, the right groove gr2 extends upwardly and rearwardly from the lower end of the cover rear surface portion 35 along the second virtual line VL2 in the side view of the vehicle. Here, the above expression "the right groove gr2 extends along the second virtual line VL2 in the side view of the vehicle" refers to that the right groove gr2 is not spaced apart from the second virtual line VL2 by a distance larger than a certain distance (10 cm, for example) in the side view of the vehicle, and that the right groove gr2 extends in parallel with the second virtual line VL2 or extends substantially in parallel with the second virtual line VL2 without inclining by an angle equal to or larger than a certain angle (15°, for example) with respect to the second virtual line VL2. Further, as indicated by a thick one-dot and dash line in Fig. 6, the right groove gr2 extends upwardly while being curved gently and inwardly of the vehicle from a position in the vicinity of the right lower end of the cover rear surface portion 35 in the front view of the vehicle.

In a front surface of the leg shield 70, a recess portion CC is constituted by an upper portion of the lower shield portion 75 and a lower portion of the upper shield portion 71 to be opposite to the front wheel 1 in the front view of the vehicle. The left shield farthest front portion 70F is located at a boundary between the upper shield portion 71 and the lower shield portion 75 and a position in the vicinity of the left side edge of the recess portion CC in the front view of the vehicle. Further, the right shield farthest front portion 70F is located at a boundary between the upper shield portion 71 and the lower shield portion 75 and a position in the vicinity of the right side edge of the recess portion CC in the front view of the vehicle.

### [3] Effects

(a) In the motorcycle 100 according to the present embodiment, the cover front surface portion 31 and the cover rear surface portion 35 of the front cover 30 respectively have outer shapes, which are substantially in parallel with the central axis 10a of the head pipe 10 and substantially flat. Thus, the flat front cover 30 that is made compact in the front-and-rear direction is realized. Therefore, the size of the front part of the vehicle can be reduced in the front-and-rear direction.

Further, the front cover 30 is supported at the head pipe 10 independently from the front fork 20, so that the front cover 30 does not rotate during an operation of the handle 17 by the rider. Further, the upper shield portion 71 of the leg shield 70 is attached to the cover rear surface portion 35 of the front cover 30. In such a configuration, it is not necessary to consider the interference between the front cover 30 and the leg shield 70 during the operation of the handle 17. Thus, the width of the leg shield 70 in the left-and-right direction H can be increased. Thus, a large part of mud splashed from the road surface by the front wheel 1 during travelling of the motorcycle 100 is received by the leg shield 70, and does not reach the rider. In this manner, in the leg shield 70, the ability to receive mud splashed from the road surface can be improved.

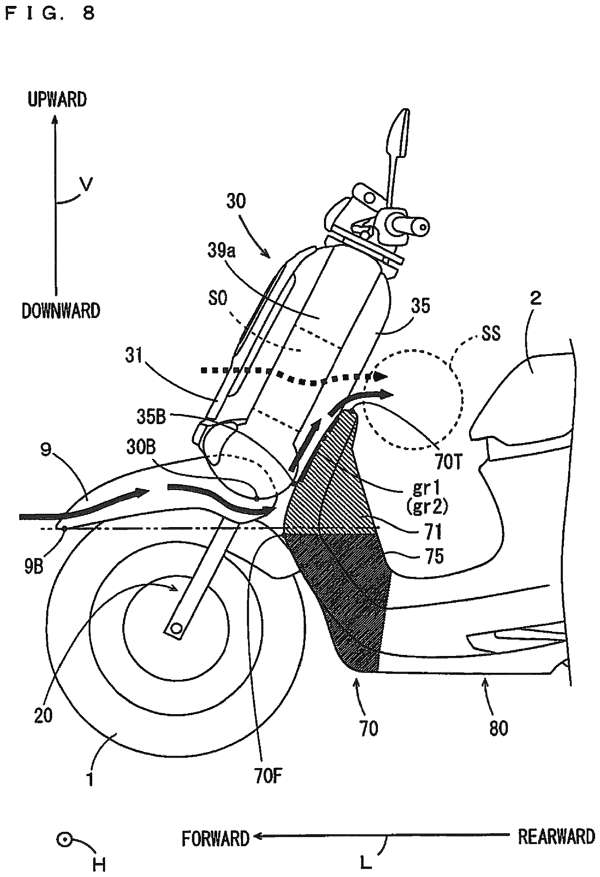

Fig. 8 is a diagram for explaining functions of the left groove gr1 and the right groove gr2 formed between the cover rear surface portion 35 and the upper shield portion 71. In Fig. 8, similarly to the example of Fig. 5, a side view of the front part of the motorcycle 100 is shown. Further, in Fig. 8, different types of hatching are applied to the upper shield portion 71 and the lower shield portion 75.

In the front part of the motorcycle 100, the shield farthest front portion 70F of the leg shield 70 is located at a position farther downward than the lower ends 35B of the cover rear surface portion 35 and the lowest ends 30B of the front cover 30. In this case, as indicated by thick solid arrows in Fig. 8, at least part of air flowing rearwardly in the vicinity of the lowest ends 30B of the front cover 30 during travelling of the motorcycle 100 is led to the upper shield portion 71. Air led to the upper shield portion 71 flows along the left groove gr1 and the right groove gr2 into a space SS between the front cover 30 and the seat 2. Thus, negative pressure is unlikely to be generated in the space SS rearward of the front cover 30. Therefore, a reduction in comfort of the rider in the motorcycle 100 is inhibited.

(b) As shown in Fig. 6, in the left-and-right direction H, a maximum width mw1 from the center of the motorcycle 100 to the left side edge of the leg shield 70 is larger than a maximum width mw2 from the center of the motorcycle 100 to the left side edge of the cover rear surface portion 35 of the front cover 30. Here, a portion, which is located leftwardly of the left flasher lamp 60a, of the left side edge of the left cover side surface portion 39a projects to a position farther leftward than other portions of the left side edge of the cover side surface portion 39a. A portion, which is located leftwardly of the flasher lamp 60a, of the left side edge of the cover side surface portion 39a is referred to as a first left edge portion ap1, and a portion, which excludes the first left edge portion ap1, of the left side edge of the cover side surface portion 39a is referred to as a second left edge portion ap2. In this case, the maximum width mw1 from the center of the motorcycle 100 to the left side edge of the leg shield 70 is larger than a maximum width mw3 from the center of the motorcycle 100 to the first left edge portion ap1 of the left cover side surface portion 39a. Further, the maximum width mw1 from the center of the motorcycle 100 to the left side edge of the leg shield 70 is larger than a maximum width mw4 from the center of the motorcycle 100 to the second left edge portion ap2 of the left cover side surface portion 39a.

Further, in the left-and-right direction H, a maximum width mw5 from the center of the motorcycle 100 to the right side edge of the leg shield 70 is larger than a maximum width mw6 from the center of the motorcycle 100 to the right side edge of the cover rear surface portion 35 of the front cover 30. Here, a portion, which is located rightwardly of the right flasher lamp 60b, of the right side edge of the right cover side surface portion 39b projects to a position farther rightward than other portions of the right side edge of the cover side surface portion 39b. A portion, which is located rightwardly of the flasher lamp 60b, of the right side edge of the cover side surface portion 39b is referred to as a first right edge portion bp1, and a portion, which excludes the first right edge portion bp1, of the right side edge of the cover side surface portion 39b is referred to as a second right edge portion bp2. In this case, the maximum width mw5 from the center of the motorcycle 100 to the right side edge of the leg shield 70 is larger than a maximum width mw7 from the center of the motorcycle 100 to the first right edge portion bp1 of the right cover side surface portion 39b. Further, the maximum width mw5 from the center of the motorcycle 100 to the right side edge of the leg shield 70 is larger than a maximum width mw8 from the center of the motorcycle 100 to the second right edge portion bp2 of the right cover side surface portion 39b.

In this case, at least part of mud splashed rearwardly at a position farther leftward than the left side edge of the front cover 30 during travelling of the motorcycle 100 is received by the leg shield 70. Further, at least part of mud splashed rearwardly at a position farther rightward than the right side edge of the front cover 30 during travelling of the motorcycle 100 is received by the leg shield 70. Therefore, the ability to receive mud in the leg shield 70 is more sufficiently improved.

(c) As indicated by a two-dots and dash line in Fig. 8, a lower end 9B of the front fender 9 is located at a position farther downward than the lower end of the cover rear surface portion 35 of the front cover 30 and further upward than the lower end of the front edge of the upper shield portion 71 in the side view of the vehicle. In this case, at least part of air flowing rearwardly along the front fender 9 during travelling of the motorcycle 100 is smoothly led to the upper shield portion 71. Therefore, a sufficient amount of air can be led to the space SS rearward of the front cover 30.

(d) As indicated by a thick dotted arrow in Fig. 8, part of air flowing rearwardly from a position forward of the front cover 30 during travelling of the motorcycle 100 flows into the slit opening SO formed in the left cover side surface portion 39a. Further, part of air flowing rearwardly from a position forward of the front cover 30 during travelling of the motorcycle 100 flows into the slit opening SO formed in the right cover side surface portion 39b (Fig. 4 and the like). In this case, air flowing from a position forward of the front cover 30 into the slit openings SO of the left and right cover side surface portions 39a, 39b is smoothly led to the space SS between the front cover 30 and the seat 2. Therefore, a more sufficient amount of air can be led to the space SS rearward of the front cover 30.

(e) As shown in Fig. 1, the upper end 70T of the leg shield 70 is located at a position farther downward than an upper end 2T of the seat 2. Further, the upper end 70T of the leg shield 70 is located at a position farther upward than a lower end 2B of the seat 2. In this case, air flowing along the left groove gr1 (Fig. 6) and the right groove gr2 (Fig. 6) during travelling of the motorcycle 100 is smoothly led to the space SS (Fig. 8) between the front cover 30 and the seat 2.

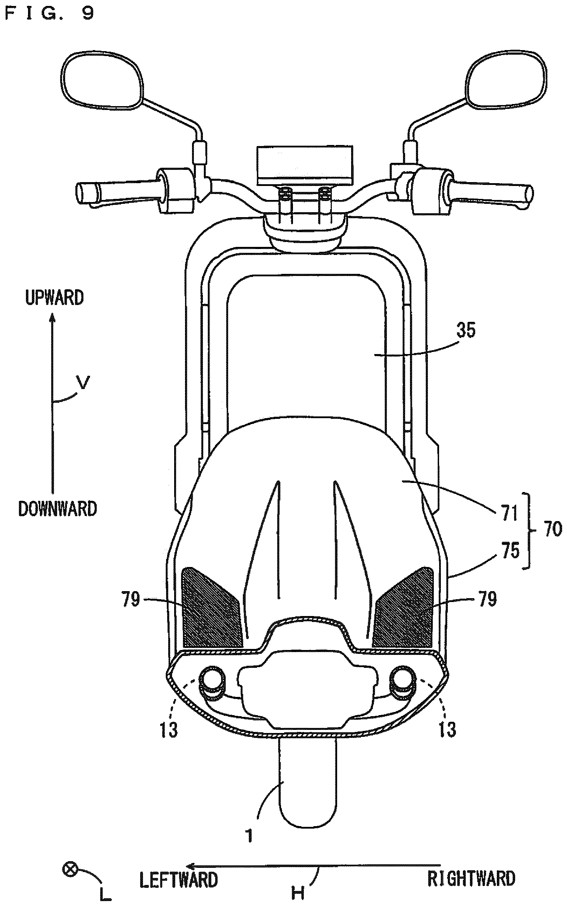

(f) Fig. 9 is a longitudinal cross sectional view of the motorcycle 100 taken along the line K-K of Fig. 5. As shown in Fig. 9, a pair of left and right sub-footrest surfaces 79 that extends in the top-and-bottom direction V when being viewed from a position rearward of the motorcycle 100 is formed at the lower shield portion 75 of the leg shield 70. As shown in Fig. 5, the left and right sub-footrest surfaces 79 extend obliquely forwardly and upwardly from the front end of the main footrest surface 81 of the footboard 80 in the side view of the vehicle.

In this case, the rider can easily change his or her driving posture by selectively placing his or her feet on the left and right main footrest surfaces 81 and the left and right sub-footrest surfaces 79. Therefore, occupant comfort of the motorcycle 100 is improved.

(g) As shown in Fig. 2, only the one down frame 12 is joined to the head pipe 10 as the body frame 11. Further, as shown in Fig. 5, the footboard 80 is located at a position farther downward than the upper shield portion 71 in the side view of the vehicle. Such a configuration is basically applied to a small-size motorcycle having small engine displacement. Therefore, in the small-size motorcycle, the size of the front part of the vehicle can be reduced in the front-and-rear direction, a reduction in occupant comfort can be inhibited, and the ability to receive mud splashed from the road surface can be improved.

### [4] Other Embodiment

(a) While only the one down frame 12 is joined to the head pipe 10 of the motorcycle 100 as the body frame 11 in the above-mentioned embodiment, the present teaching is not limited to this. For example, two or more than two frame members may be joined to the head pipe 10 as part of a body frame. In this case, a large-size body frame having high rigidity can be employed. Thus, the present teaching can be applied to a large-size straddled vehicle.
(b) While the left and right sub-footrest surfaces 79 are formed at the lower shield portion 75 in the above-mentioned embodiment, the present teaching is not limited to this. The left and right sub-footrest surfaces 79 do not have to be formed at the lower shield portion 75.
(c) In the above-mentioned embodiment, the left and right main-footrest surfaces 81 are formed at the upper surface of the footboard 80. While the left and right main footrest surfaces 81 are provided at a distance from each other in the left-and-right direction H as shown in Fig. 3, the present teaching is not limited to this. In the footboard 80, a single main footrest surface, which extends in the left-and-right direction H from a left side edge to a right side edge of the footboard 80 in the plan view of the vehicle and extends in the front-and-rear direction L, may be provided.
(d) While the above-mentioned embodiment is an example in which the present teaching is applied to a motorcycle, the present teaching is not limited to this. The present teaching may be applied to another vehicle such as a four-wheeled automobile, a motor tricycle, an ATV (All Terrain Vehicle) or the like.

### [5] Correspondences between Constituent Elements in Claims and Parts in Preferred Embodiments

In the following paragraphs, examples of correspondences between various elements recited in the claims below and those described above with respect to various preferred embodiments are explained.

In the above-mentioned embodiment, the motorcycle 100 is an example of a straddled vehicle, the head pipe 10 is an example of a head pipe, the front fork 20 is an example of a front fork, the front cover 30 is an example of a front cover and the leg shield 70 is an example of a leg shield.

Further, the cover front surface portion 31 is an example of a cover front surface portion, the cover rear surface portion 35 is an example of a cover rear surface portion, the central axis 10a is an example of a central axis of a head pipe, the first virtual line VL1 is an example of a first virtual line, the second virtual line VL2 is an example of a second virtual line, the upper shield portion 71 is an example of an upper shield portion, and the lower shield portion 75 is an example of a lower shield portion.

Further, the front fender 9 is an example of a front fender, the seat 2 is an example of a seat, the footboard 80 is an example of a footboard, the body frame 11 is an example of a body frame, the down frame 12 is an example of a down frame, the first rear frame 13 is an example of a rear frame, the main footrest surface 81 is an example of a main footrest surface, and the sub-footrest surface 79 is an example of a sub-footrest surface.

Further, the lower end 35B of the cover rear surface portion 35 is an example of a lower end of a cover rear surface portion, the upper end 70T of the leg shield 70 is an example of an upper end of a leg shield, the lower end 9B of the front fender 9 is an example of a lower end of a front fender, the upper end 2T of the seat 2 is an example of an upper end of a seat, the left side edge 35L of the cover rear surface portion 35 is an example of a left side edge of a cover rear surface portion, the left side edge 71L of the upper shield portion 71 is an example of a left side edge of an upper shield portion, the right side edge 35R of the cover rear surface portion 35 is an example of a right side edge of a cover rear surface portion, and the right side edge 71R of the upper shield portion 71 is an example of a right side edge of an upper shield portion.

Further, the left cover side surface portion 39a is an example of a left cover side surface portion, the right cover side surface portion 39b is an example of a right cover side surface portion, and the slit opening SO is an example of an opening formed in each of a left cover side surface portion and a right cover side surface portion.

As each of constituent elements recited in the claims, various other elements having configurations or functions described in the claims can be also used.

## Claims

1. A straddled vehicle comprising:
a head pipe (10);
a front fork (20) rotatably provided at the head pipe (10);
a front cover (30) supported at the head pipe (10); and
a leg shield (70) provided rearwardly of the front cover (30) in a vehicle front-and-rear direction (L), wherein
the front cover (30) has
a cover front surface portion (31) arranged forwardly of the head pipe (10) in the vehicle front-and-rear direction (L), and
a cover rear surface portion (35) arranged rearwardly of the head pipe (10) in the vehicle front-and-rear direction (L),
a front edge of the cover front surface portion (31) in a side view of the vehicle extends along a first virtual line (VL1) that is in parallel with a central axis (10a) of the head pipe (10) in the side view of the vehicle at a position forward of the head pipe (10),
a rear edge of the cover rear surface portion (35) in the side view of the vehicle extends along a second virtual line (VL2) that is in parallel with the central axis (10a) of the head pipe (10) in the side view of the vehicle at a position rearward of the head pipe (10),
the leg shield (70) has
an upper shield portion (71) attached to the cover rear surface portion (35), and
a lower shield portion (75) provided below the upper shield portion (71),
part of the cover rear surface portion (35) and part of the upper shield portion (71) overlap with each other in a front view of the vehicle,
the upper shield portion (71) extends along the cover rear surface portion (35) to a position farther downward than a lower end (35B) of the cover rear surface portion (35) in the side view of the vehicle,
the lower shield portion (75) extends obliquely, downwardly and rearwardly of the vehicle from a lower end of the upper shield portion (71) in the side view of the vehicle, a left groove (gr1) extending along the second virtual line (VL2) in the side view of the vehicle is formed between a left side edge (35L) of the cover rear surface portion (35) and a left side edge (71L) of the upper shield portion (71), and
a right groove (gr2) extending along the second virtual line (VL2) in the side view of the vehicle is formed between a right side edge (35R) of the cover rear surface portion (35) and a right side edge (71R) of the upper shield portion (71), **characterized in that** air led to the upper shield portion (71) flows along the left groove (gr1) and the right groove (gr2) into a space rearward of the front cover (30), so that negative pressure is unlikely to be generated in the space rearward of the front cover (30).

2. The straddled vehicle according to claim 1, wherein a maximum width (mw1) from a center of the vehicle to a left side edge of the leg shield (70) is larger than a maximum width (mw2) from the center of the vehicle to the left side edge (35L) of the cover rear surface portion (35) in a vehicle left-and-right direction (H), and
a maximum width (mw5) from the center of the vehicle to a right side edge of the leg shield (70) is larger than a maximum width (mw6) from the center of the vehicle to the right side edge (35R) of the cover rear surface portion (35) in the vehicle left-and-right direction (H).

3. The straddled vehicle according to claim 1 or 2, further comprising a front fender (9) provided at the front fork (20) at a position above a front wheel (1), wherein
the front fender (9) is provided to extend in the vehicle front-and-rear direction (L) in a plan view of the vehicle, and
a lower end (9B) of the front fender (9) is located at a position farther downward than a lower end (35B) of the cover rear surface portion (35) and farther upward than a lower end of the upper shield portion (71).

4. The straddled vehicle according to any one of claims 1 to 3, further comprising a seat (2) provided at a position farther rearward than the front cover (30) and the leg shield (70), wherein
an upper end of the upper shield portion (71) of the leg shield (70) is located at a position farther downward than an upper end (2T) of the seat (2).

5. The straddled vehicle according to any one of claims 1 to 4, further comprising:
a footboard (80) provided to extend rearwardly of the vehicle from the lower shield portion (75) of the leg shield (70); and
a body frame (11) joined to the head pipe (10), wherein
the body frame (11) includes
a down frame (12) that extends downwardly and rearwardly of the vehicle from the head pipe (10), and
a rear frame (13) that extends rearwardly of the vehicle from the down frame (12),
at least part of an upper surface of the footboard (80) is arranged above the rear frame (13) and overlaps with the rear frame (13) in a plan view of the vehicle, and
the footboard (80) is located at a position farther downward than the upper shield portion (71) in the side view of the vehicle.

6. The straddled vehicle according to claim 5, wherein a main footrest surface (81) extending in the vehicle front-and-rear direction (L) in the plan view of the vehicle is formed at at least part of an upper surface of the footboard (80), and
the lower shield portion (75) has a sub-footrest surface (79) extending obliquely, forwardly and upwardly of the vehicle from a front end of the main footrest surface (81) in the side view of the vehicle.

7. The straddled vehicle according to any one of claims 1 to 6, wherein the front cover (30) further has
a left cover side surface portion (39a) arranged leftwardly of the head pipe (10) in a vehicle left-and-right direction (H), and
a right cover side surface portion (39b) arranged rightwardly of the head pipe (10) in the vehicle left-and-right direction (H),
the left cover side surface portion (39a) connects a left side edge of the cover front surface portion (31) to a left side edge (35L) of the cover rear surface portion (35), the right cover side surface portion (39b) connects a right side edge of the cover front surface portion (31) to a right side edge (35R) of the cover rear surface portion (35), and
an opening (SO) penetrating the front cover (30) from a position forward of the vehicle to a position rearward of the vehicle is formed in each of the left cover side surface portion (39a) and the right cover side surface portion (39b).

## Patentansprüche

1. Ein Spreiz-Sitz-Fahrzeug, das umfasst:
ein Kopf-Rohr (10);
eine Vordergabel (20), die drehbar am Kopf-Rohr (10) vorgesehen ist;
eine vordere Abdeckung (30), die am Kopf-Rohr (10) gelagert ist; und
ein Beinschild (70), das hinter der vorderen Abdeckung (30) in einer Fahrzeug-Vorder-und-Rück-Richtung (L) vorgesehen ist, wobei
die vordere Abdeckung (30) hat
einen Abdeckungs-Vorder-Flächen-Abschnitt (31), der in der Fahrzeug-Vorder-und-Rück-Richtung (L) vor dem Kopf-Rohr (10) angeordnet ist, und
einen Abdeckungs-Rück-Flächen-Abschnitt (35), der in der Fahrzeug-Vorder-und-Rück-Richtung (L) hinter dem Kopf-Rohr (10) angeordnet ist,
eine Vorder-Kante des Abdeckungs-Vorder-Flächen-Abschnitts (31) sich in einer Seiten-Ansicht des Fahrzeugs entlang einer ersten virtuellen Linie (VL1) erstreckt, die parallel zu einer Mittel-Achse (10a) des Kopf-Rohrs (10) in der Seiten-Ansicht des Fahrzeugs an einer Position vor dem Kopf-Rohr (10) ist,
eine Rück-Kante des Abdeckungs-Rück-Flächen-Abschnitts (35) sich in der Seiten-Ansicht des Fahrzeugs entlang einer zweiten virtuellen Linie (VL2) erstreckt, die parallel zur Mittel-Achse (10a) des Kopf-Rohrs (10) in der Seiten-Ansicht des Fahrzeugs an einer Position hinter dem Kopf-Rohr (10) ist,
das Beinschild (70) hat
einen oberen Schild-Abschnitt (71), der an dem Abdeckungs-Rück-Flächen-Abschnitt (35) angebracht ist, und
einen unteren Schild-Abschnitt (75), der unterhalb des oberen Schild-Abschnitts (71) vorgesehen ist,
ein Teil des Abdeckungs-Rück-Flächen-Abschnitts (35) und ein Teil des oberen Schild-Abschnitts (71) sich in einer Vorder-Ansicht des Fahrzeugs überlappen,
der obere Schild-Abschnitt (71) sich entlang des Abdeckungs-Rück-Flächen-Abschnitts (35) bis zu einer Position erstreckt, die weiter unten liegt als ein unteres Ende (35B) des Abdeckungs-Rück-Flächen-Abschnitts (35) in der Seiten-Ansicht des Fahrzeugs,
der untere Schild-Abschnitt (75) sich von einem unteren Ende des oberen Schild-Abschnitts (71) schräg nach unten und nach hinten erstreckt, in der Seiten-Ansicht des Fahrzeugs,
eine linke Nut (gr1), die sich entlang der zweiten virtuellen Linie (VL2) in der Seiten-Ansicht des Fahrzeugs erstreckt, ist zwischen einer linken Seiten-Kante (35L) des Abdeckungs-Rück-Flächen-Abschnitts (35) und einer linken Seiten-Kante (71L) des oberen Schild-Abschnitts (71) ausgebildet, und
eine rechte Nut (gr2), die sich entlang der zweiten virtuellen Linie (VL2) in der Seiten-Ansicht des Fahrzeugs erstreckt, ist zwischen einer rechten Seiten-Kante (35R) des Abdeckungs-Rück-Flächen-Abschnitts (35) und einer rechten Seiten-Kante (71R) des oberen Schild-Abschnitts (71) ausgebildet, **dadurch gekennzeichnet, dass** Luft, die zu dem oberen Schild-Abschnitt (71) geleitet ist, entlang der linken Nut (gr) und der rechten Nut (gr2) in einen Raum hinter der vorderen Abdeckung (30) strömt, so dass es unwahrscheinlich ist, dass in dem Raum hinter der vorderen Abdeckung (30) ein negativer Druck erzeugt wird.

2. Das Spreiz-Sitz-Fahrzeug gemäß Anspruch 1, wobei eine maximale Breite (mw1) von einer Mitte des Fahrzeugs zu einer linken Seiten-Kante des Beinschilds (70) größer ist als eine maximale Breite (mw2) von der Mitte des Fahrzeugs zu der linken Seiten-Kante (35L) des Abdeckungs-Rück-Flächen-Abschnitts (35) in einer Fahrzeug-Links-Rechts-Richtung (H), und
eine maximale Breite (mw5) von der Mitte des Fahrzeugs zu einer rechten Seiten-Kante des Beinschilds (70) größer ist als eine maximale Breite (mw6) von der Mitte des Fahrzeugs zu der rechten Seiten-Kante (35R) des Abdeckungs-Rück-Flächen-Abschnitts (35) in der Links-Rechts-Richtung (H) des Fahrzeugs.

3. Das Spreiz-Sitz-Fahrzeug gemäß Anspruch 1 oder 2, das weiterhin einen vorderen Kotflügel (9), der an der Vordergabel (20) an einer Position über einem Vorderrad (1) vorgesehen ist, umfasst, wobei
der vordere Kotflügel (9) vorgesehen ist, um sich in Fahrzeug-Vorder-und-Rück-Richtung (L) in einer Draufsicht auf das Fahrzeug, zu erstrecken, und
ein unteres Ende (9B) des vorderen Kotflügels (9) sich an einer Position befindet, die weiter unten liegt als ein unteres Ende (35B) des Abdeckungs-Rück-Flächen-Abschnitts (35) und weiter oben als ein unteres Ende des oberen Schild-Abschnitts (71).

4. Das Spreiz-Sitz-Fahrzeug gemäß einem der Ansprüche 1 bis 3, das weiterhin einen Sitz (2), der an einer Position vorgesehen ist, die weiter hinten liegt als die vordere Abdeckung (30) und das Beinschild (70), umfasst, wobei
ein oberes Ende des oberen Schild-Abschnitts (71) des Beinschilds (70) sich in einer Position befindet, die weiter unten liegt als ein oberes Ende (2T) des Sitzes (2).

5. Das Spreiz-Sitz-Fahrzeug gemäß einem der Ansprüche 1 bis 4, das weiterhin umfasst:
ein Fuß-Brett (80), das vorgesehen ist, um sich von dem unteren Schild-Abschnitt (75) des Beinschilds (70) nach hinten vom Fahrzeug zu erstrecken; und
einem Körper-Rahmen (11), der mit dem Kopf-Rohr (10) verbunden ist, wobei der Körper-Rahmen (11) beinhaltet
einen unteren Rahmen (12), der sich von dem Kopf-Rohr (10) aus nach unten und nach hinter von dem Fahrzeug erstreckt, und
einen hinteren Rahmen (13), der sich von dem unteren Rahmen (12) nach hinter von dem Fahrzeug erstreckt,
zumindest ein Teil einer oberen Fläche des Fuß-Bretts (80) oberhalb des hinteren Rahmens (13) angeordnet ist und den hinteren Rahmen (13) überlappt, in einer Draufsicht auf das Fahrzeug, und
das Fuß-Brett (80) in einer Position, weiter unten als der obere Schild-Abschnitt (71), in der Seiten-Ansicht des Fahrzeugs, angeordnet ist

6. Das Spreiz-Sitz-Fahrzeug gemäß Anspruch 5, wobei eine Haupt-Fuß-Brett-Fläche (81), die sich in der Fahrzeug-Vorder-und-Rück-Richtung (L) in der Draufsicht des Fahrzeugs erstreckt, an mindestens einem Teil einer oberen Fläche des Fuß-Bretts (80) ausgebildet ist, und
der untere Schild-Abschnitt (75) eine Unter-Fuß-Brett-Fläche (79) hat, die sich von einem vorderen Ende der Haupt-Fuß-Brett-Fläche (81) in der Seiten-Ansicht des Fahrzeugs schräg nach vorne und nach oben erstreckt.

7. Das Spreiz-Sitz-Fahrzeug gemäß einem der Ansprüche 1 bis 6, wobei die vordere Abdeckung (30) weiterhin hat
einen linken Abdeckungs-Seiten-Flächen-Abschnitt (39a), der in einer Fahrzeug-Links-Rechts-Richtung (H) links von dem Kopf-Rohr (10) angeordnet ist, und einen rechten Abdeckungs-Seiten-Flächen-Abschnitt (39b), der in der Links-Rechts-Richtung (H) des Fahrzeugs rechts von dem Kopf-Rohr (10) angeordnet ist,
der linke Abdeckungs-Seiten-Flächen-Abschnitt (39a) eine linke Seiten-Kante des Abdeckungs-Vorder-Flächen-Abschnitts (31) mit einer linken Seiten-Kante (35L) des Abdeckungs-Rück-Flächen-Abschnitts (35) verbindet,
der rechte Abdeckungs-Seiten-Flächen-Abschnitt (39b) eine rechte Seiten-Kante des Abdeckungs-Vorder-Flächen-Abschnitts (31) mit einer rechten Seiten-Kante (35R) des Abdeckungs-Rück-Flächen-Abschnitts (35) verbindet, und
eine Öffnung (SO), welche die vordere Abdeckung (30) von einer Position vor dem Fahrzeug zu einer Position hinter dem Fahrzeug durchdringt, in jedem von dem linken Abdeckungs-Seiten-Flächen-Abschnitt (39a) und dem rechten Abdeckungs-Seiten-Flächen-Abschnitt (39b) ausgebildet ist.

## Revendications

1. Véhicule à enfourcher comprenant :
un tube de tête (10) ;
une fourche avant (20) agencée de manière rotative au niveau du tube de tête (10) ; un capot avant (30) supporté au niveau du tube de tête (10) ; et
un protège-jambes (70) agencé vers l'arrière du capot avant (30) dans une direction avant et arrière de véhicule (L), dans lequel
le capot avant (30) a
une portion de surface avant de capot (31) disposée vers l'avant du tube de tête (10) dans la direction avant et arrière de véhicule (L), et
une portion de surface arrière de capot (35) disposée vers l'arrière du tube de tête (10) dans la direction avant et arrière de véhicule (L),
un bord avant de la portion de surface avant de capot (31) sur une vue de côté du véhicule s'étend le long d'une première ligne virtuelle (VL1) qui est parallèle à un axe central (10a) du tube de tête (10) sur la vue de côté du véhicule à une position en avant du tube de tête (10),
un bord arrière de la portion de surface arrière de capot (35) sur la vue de côté du véhicule s'étend le long d'une seconde ligne virtuelle (VL2) qui est parallèle à l'axe central (10a) du tube de tête (10) sur la vue de côté du véhicule à une position en arrière du tube de tête (10),
le protège-jambes (70) a
une portion de protection supérieure (71) fixée à la partie de surface arrière de capot (35), et
une portion de protection inférieure (75) agencée au-dessous de la partie de protection supérieure (71),
une partie de la portion de surface arrière de capot (35) et une partie de la portion de protection supérieure (71) se chevauchent l'une et l'autre sur une vue de face du véhicule,
la portion de protection supérieure (71) s'étend le long de la portion de surface arrière de capot (35) jusqu'à une position davantage vers le bas qu'une extrémité inférieure (35B) de la portion de surface arrière de capot (35) sur la vue de côté du véhicule,
la portion de protection inférieure (75) s'étend obliquement, vers le bas et vers l'arrière du véhicule depuis une extrémité inférieure de la portion de protection supérieure (71) sur la vue de côté du véhicule,
une rainure gauche (gr1) s'étendant le long de la seconde ligne virtuelle (VL2) sur la vue de côté du véhicule est formée entre un bord latéral gauche (35L) de la portion de surface arrière de capot (35) et un bord latéral gauche (71L) de la portion de protection supérieure (71), et
une rainure droite (gr2) s'étendant le long de la seconde ligne virtuelle (VL2) sur la vue de côté du véhicule est formée entre un bord latéral droit (35R) de la portion de surface arrière de capot (35) et un bord latéral droit (71R) de la portion de protection supérieure (71), **caractérisé en ce que** de l'air acheminé vers la portion de protection supérieure (71) s'écoule le long de la rainure gauche (gr1) et la rainure droite (gr2) dans un espace en arrière du capot avant (30), de sorte qu'il est peu probable qu'une pression négative soit générée dans l'espace en arrière du capot avant (30).

2. Véhicule à enfourcher selon la revendication 1, dans lequel une largeur maximale (mw1) d'un centre du véhicule à un bord latéral gauche du protège-jambes (70) est supérieure à une largeur maximale (mw2) du centre du véhicule au bord latéral gauche (35L) de la portion de surface arrière de capot (35) dans une direction gauche et droite de véhicule (H), et
une largeur maximale (mw5) du centre du véhicule à un bord latéral droit du protège-jambes (70) est supérieure à une largeur maximale (mw6) du centre du véhicule au bord latéral droit (35R) de la portion de surface arrière de capot (35) dans la direction gauche et droite de véhicule (H).

3. Véhicule à enfourcher selon la revendication 1 ou 2, comprenant en outre un garde-boue avant (9) agencé au niveau de la fourche avant (20) à une position au-dessus d'une roue avant (1), dans lequel
le garde-boue avant (9) est agencé pour s'étendre dans la direction avant et arrière de véhicule (L) sur une vue en plan du véhicule, et
une extrémité inférieure (9B) du garde-boue avant (9) est située à une position davantage vers le bas qu'une extrémité inférieure (35B) de la portion de surface arrière de capot (35) et davantage vers le haut qu'une extrémité inférieure de la portion de protection supérieure (71).

4. Véhicule à enfourcher selon l'une quelconque des revendications 1 à 3, comprenant en outre un siège (2) agencé à une position davantage vers l'arrière que le capot avant (30) et le protège-jambes (70), dans lequel
une extrémité supérieure de la portion de protection supérieure (71) du protège-jambes (70) est située à une position davantage vers le bas qu'une extrémité supérieure (2T) du siège (2).

5. Véhicule à enfourcher selon l'une quelconque des revendications 1 à 4, comprenant en outre :
un marchepied (80) agencé pour s'étendre vers l'arrière du véhicule depuis la portion de protection inférieure (75) du protège-jambes (70) ; et
un châssis de carrosserie (11) assemblé au tube de tête (10), dans lequel le châssis de carrosserie (11) comprend
un châssis inférieur (12) qui s'étend vers le bas et vers l'arrière du véhicule depuis le tube de tête (10), et
un châssis arrière (13) qui s'étend vers l'arrière du véhicule depuis le châssis inférieur (12), au moins une partie d'une surface supérieure du marchepied (80) est disposée au-dessus du châssis arrière (13) et chevauche le châssis arrière (13) sur une vue en plan du véhicule, et le marchepied (80) est situé à une position davantage vers le bas que la portion de protection supérieure (71) sur la vue de côté du véhicule.

6. Véhicule à enfourcher selon la revendication 5, dans lequel une surface principale de repose-pied (81) s'étendant dans la direction avant et arrière de véhicule (L) sur la vue en plan du véhicule est formée au niveau au moins en partie d'une surface supérieure du marchepied (80), et
la portion de protection inférieure (75) a une sous-surface de repose-pied (79) s'étendant obliquement, vers l'avant et vers le haut du véhicule depuis une extrémité avant de la surface principale de repose-pied (81) sur la vue de côté du véhicule.

7. Véhicule à enfourcher selon l'une quelconque des revendications 1 à 6, dans lequel le capot avant (30) a en outre
une portion de surface côté capot gauche (39a) disposée vers la gauche du tube de tête (10) dans une direction gauche et droite de véhicule (H), et
une portion de surface côté capot droit (39b) disposée vers la droite du tube de tête (10) dans la direction gauche et droite de véhicule (H),
la portion de surface côté capot gauche (39a) relie un bord latéral gauche de la portion de surface avant de capot (31) à un bord latéral gauche (35L) de la portion de surface arrière de capot (35),
la portion de surface côté capot droite (39b) relie un bord latéral droit de la portion de surface avant de capot (31) à un bord latéral droit (35R) de la portion de surface arrière de capot (35), et
une ouverture (SO) pénétrant dans le capot avant (30) depuis une position à l'avant du véhicule jusqu'à une position à l'arrière du véhicule est formée dans chacune de la portion de surface côté capot gauche (39a) et de la portion de surface côté capot droit (39b).
